(19) Europäisches Patentamt / European Patent Office / Office européen des brevets

(11) **EP 3 628 567 A1**

(12) **EUROPEAN PATENT APPLICATION**

(43) Date of publication:
**01.04.2020 Bulletin 2020/14**

(51) Int Cl.:
**B62D 5/04** *(2006.01)*    **F16H 25/22** *(2006.01)*

(21) Application number: **19199251.0**

(22) Date of filing: **24.09.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.09.2018 JP 2018178330**

(71) Applicant: **JTEKT CORPORATION**
**Osaka-shi, Osaka 542-8502 (JP)**

(72) Inventors:
• **YAMAZAKI, Eiji**
  **Osaka-shi, Osaka 542-8502 (JP)**
• **KATO, Hideya**
  **Osaka-shi, Osaka 542-8502 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Strasse 22**
**85354 Freising (DE)**

(54) **STEERING SYSTEM**

(57)    Provided is a steering system that can further suppress deflection of a steered shaft starting from an end portion of an outer peripheral rolling groove thereof, even when an excessively large load is input to the end portion of the steered shaft. In a steered shaft (20) in a steering system (10), when a section of a first end portion (25a) having a prescribed length (L1) shorter than a length from an end face to an outer peripheral rolling groove (20a) is defined as a first section (Ar1), a section of the first end portion (25a) other than the first section (Ar1) and adjacent to the outer peripheral rolling groove (20a) is defined as a second section (Ar2), a section, in the outer peripheral rolling groove (20a), starting from a boundary between the second section (Ar2) and the outer peripheral rolling groove (20a) and having a prescribed length (L3) shorter than an axial length of a section along which the outer peripheral rolling groove (20a) extends is defined as a third section (Ar3), and a section other than the third section (Ar3) in the outer peripheral rolling groove (20a) is defined as a fourth section (Ar4), a maximum value of a hardening depth in the second section (Ar2) is larger than a hardening depth in the first section (Ar1).

FIG.3

## Description

BACKGROUND OF THE INVENTION

### 1. Field of the Invention

The invention relates to a steering system.

### 2. Description of the Related Art

There is an electric power steering system provided with a steering operation assist device (a steering operation force application device) that assists in applying an axial force to a steered shaft by a driving force of a motor. As an example of such an electric power steering system, there is a so-called rack-and-pinion electric power steering system having rack teeth and a screw shaft of a ball screw device (see, for example, Japanese Unexamined Patent Application Publication No. 2004-10956 (JP 2004-10956 A) and No. 2003-160812 (JP 2003-160812 A)). In the rack-and-pinion electric power steering system, the steering operation assist device converts the driving force of the motor into an axial force in an axial direction of the steered shaft through the ball screw device, and applies the axial force to the steered shaft. The steering operation assist device axially reciprocates the steered shaft coupled to steered wheels via tie rods to steer the steered wheels.

However, in the configuration described above, for example, when one of the steered wheels runs over a curb, a large force in a bending direction may be input from the one of the steered wheels to an end portion of the steered shaft as a reaction force. In such a case, bending stress tends to be concentrated at an axial end portion of an outer peripheral rolling groove, which is formed on an outer peripheral surface of the steered shaft and constitutes the ball screw device, that is, a boundary between the outer peripheral rolling groove and a cylindrical end portion of the steered shaft on the side where the force in the bending direction is input.

Although JP 2004-10956 A describes changing hardness and depth of hardening to desired magnitudes at each portion of the steered shaft in the axial direction, an idea of changing the hardness or the depth on portions where the bending stress tends to be concentrated is not disclosed. Further, according to Japanese Unexamined Patent Application Publication No. 2003-160812 (JP 2003-160812 A), for cost reduction, of the outer peripheral rolling groove of the steered shaft constituting the ball screw device, heat treatment (hardening) is performed only on portions on which balls of the ball screw device actually roll to improve the hardness of the outer peripheral rolling groove. However, the idea of changing the hardness or the depth of hardening on portions where the bending stress tends to be concentrated is not disclosed. For this reason, when an excessively large force in the bending direction is input to the end portion of the steered shaft, the steered shaft may be deflected starting from the boundary between the outer peripheral rolling groove and the end portion.

SUMMARY OF THE INVENTION

An object of the invention is to provide a steering system that can further suppress deflection of a steered shaft starting from an end portion of an outer peripheral rolling groove thereof, even when an excessively large load is input to the end portion of the steered shaft.

A steering system according to an aspect of the present invention includes a housing, a steered shaft, a steering operation force application device, and a ball screw device. The steered shaft is supported by the housing and each of opposite ends of the steered shaft is coupled to a corresponding one of steered wheels via a corresponding one of tie rods. The steered shaft is relatively movable in an axial direction with respect to the housing to steer the steered wheels. The steering operation force application device is configured to apply an axial force to the steered shaft using a motor as a driving force. The ball screw device is included in the steering operation force application device and configured to directly transmit axial force to the steered shaft.

The steered shaft includes a cylindrical end portion and a helical outer peripheral rolling groove. The cylindrical end portion is provided on the opposite ends of the steered shaft and has a prescribed length from an end face. The helical outer peripheral rolling groove is formed in an outer peripheral surface between opposite end portions of the steered shaft in the axial direction and constitutes the ball screw device. In the axial direction, the outer peripheral rolling groove is formed in contact with a first end portion that is one end portion of the opposite end portions. When a section of the first end portion on an end face side and having a prescribed length shorter than a length from the end face to the outer peripheral rolling groove is defined as a first section, a section of the first end portion other than the first section and adjacent to the outer peripheral rolling groove is defined as a second section, a section, in the outer peripheral rolling groove, starting from a boundary between the second section and the outer peripheral rolling groove and having a prescribed length shorter than an axial length of a section along which the outer peripheral rolling groove extends is defined as a third section, and a section other than the third section in the outer peripheral rolling groove is defined as a fourth section, a maximum value of a hardening depth in the second section is larger than a hardening depth in the first section.

As described in the above aspect, the maximum value of the hardening depth in the second section that is located adjacent to the outer peripheral rolling groove is larger than the hardening depth in the first section that is not located adjacent to the outer peripheral rolling groove. Even when a load is input to the end portion of the steered shaft
and excessively large stress in the bending direction is applied to the steered shaft, deflection of the steered shaft is effectively restrained, since the second section and the third section located on both axial sides of the end portion of the outer peripheral rolling groove (boundary) and subjected to large stress have large hardening depths. In this case, the hardening depths are increased only in the sections (the second section and the third section) that are required for restriction of deflection, allowing reduction in the entire cycle time for heat treatment and the cost.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

> FIG. 1 is a schematic view illustrating an entirety of an electric power steering system according to the present embodiment;
> FIG. 2 is an enlarged sectional view of a steering operation force application device and a ball screw device;
> FIG. 3 is a diagram illustrating each section of a steered shaft;
> FIG. 4 is a graph illustrating a depth of hardening in each section of the steered shaft;
> FIG. 5 is a diagram illustrating a state where a reaction force is input to a first end portion side of the steered shaft;
> FIG. 6 is a diagram schematically illustrating deflection of the steered shaft corresponding to FIG. 5 when the reaction force is input to the first end portion side of the steered shaft;
> FIG. 7 is a diagram illustrating a state where a reaction force is input to a second end portion side of the steered shaft;
> FIG. 8 is a diagram schematically illustrating deflection of the steered shaft corresponding to FIG. 7 when the reaction force is input to the second end portion side of the steered shaft; and
> FIG. 9 is a graph illustrating the depths of hardening in first to sixth sections according to first and second modifications.

DETAILED DESCRIPTION OF EMBODIMENTS

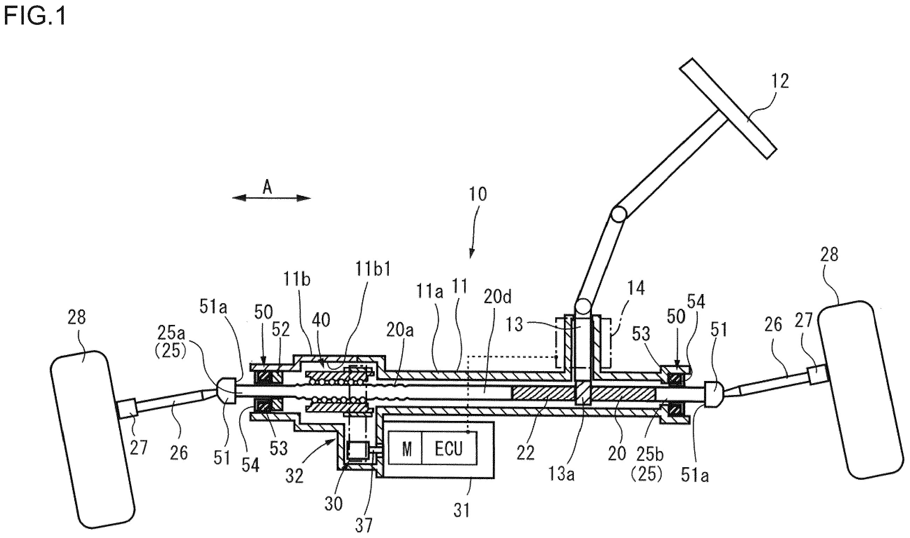

Hereinafter, a first embodiment of the invention will be described with reference to the accompanying drawings. FIG. 1 is a diagram illustrating an entirety of an electric power steering system (corresponding to a steering system) according to the invention. The electric power steering system is a steering system that assists in driver's steering by applying an axial force to a steered shaft 20.

An electric power steering system 10 (hereinafter referred to simply as a "steering system 10") is a device that steers steered wheels 28, 28 by causing a steered shaft 20 coupled to the steered wheels 28, 28 of a vehicle to reciprocate in direction A (the right-left direction in FIG. 1) that coincides with an axial direction of the steered shaft 20. In the following description, the left side in the axial direction A in FIG. 1 may be referred to as a first side, and the right side thereof may be referred to as a second side.

As illustrated in FIG. 1, the steering system 10 includes a housing 11 that accommodates and supports the steered shaft 20, a steering wheel 12, a steering shaft 13, a torque detecting device 14, an electric motor M (corresponding to a motor and hereinafter simply referred to as a "motor M"), the steered shaft 20 already described, a steering operation force application device 30, a ball screw device 40, and damper portions 50.

The housing 11 is a fixed member that is fixed to the vehicle. The housing 11 has a tubular shape and supports the steered shaft 20 with the steered shaft 20 inserted therethrough such that the steered shaft 20 is reciprocally movable in the direction A. The housing 11 includes a first housing 11a and a second housing 11b fixed to the first side of the first housing 11a in the direction A.

The steering wheel 12 is fixed to an end portion of the steering shaft 13 and rotatably supported in a vehicle cabin. The steering shaft 13 transmits torque applied to the steering wheel 12 by a driver's operation to the steered shaft 20.

A pinion 13a that constitutes a rack-and-pinion mechanism is formed at an end portion of the steering shaft 13 on a steered shaft 20 side. The pinion 13a rotates together with rotation of the steering wheel 12. The torque detecting device 14 detects torque applied to the steering shaft 13 based on an amount of torsion generated by the steering shaft 13.

The steered shaft 20 extends in the direction A. The steered shaft 20 is supported by the housing 11, and each end portion 25 (a first end portion 25a and a second end portion 25b) having a cylindrical shape is coupled to the right and left steered wheels 28, 28 via large diameter portions 51, 51 serving as joints and tie rods 26, 26. The steered shaft 20 relatively moves in the direction A (the axial direction) in conjunction with the rotation of the steering wheel 12, thereby steering the steered wheels 28, 28.

Rack teeth 22 are formed on a portion of an outer peripheral surface of the steered shaft 20. The rack teeth 22 mesh with the pinion 13a to constitute the rack-and-pinion mechanism discussed above together with the pinion 13a. In the rack-and-pinion mechanism, a maximum axial force transmittable between the steering shaft 13 and the steered shaft 20 is set based on factors such as usage of the steering system 10. Details of the steered shaft 20 will be described later.

Each of the large diameter portions 51, 51 provided in the steered shaft 20 is screwed and fixed to an outer periphery of a corresponding one of the end portions 25 (the first end portion 25a and the second end portion 25b). Each of the tie rods 26, 26 is coupled to a corresponding one of the outer ends of the large diameter portions 51, 51. Each of the distal ends of the tie rods 26, 26 is coupled to a corresponding one of the right and left steered wheels 28, 28 via knuckle arms 27, 27.

Thus, when the steering wheel 12 is operated, the steered shaft 20 linearly and reciprocally moves in the direction A (in the axial direction) via the rack-and-pinion mechanism. As the movement in the direction A is transmitted to the knuckle arms 27, 27 via the tie rods 26, 26, the steered wheels 28, 28 are steered and a travelling direction of the vehicle is changed as illustrated in FIG. 1. At this time, the tie rods 26, 26 are disposed at prescribed angles with respect to an axis of the steered shaft 20 as illustrated in FIG. 1.

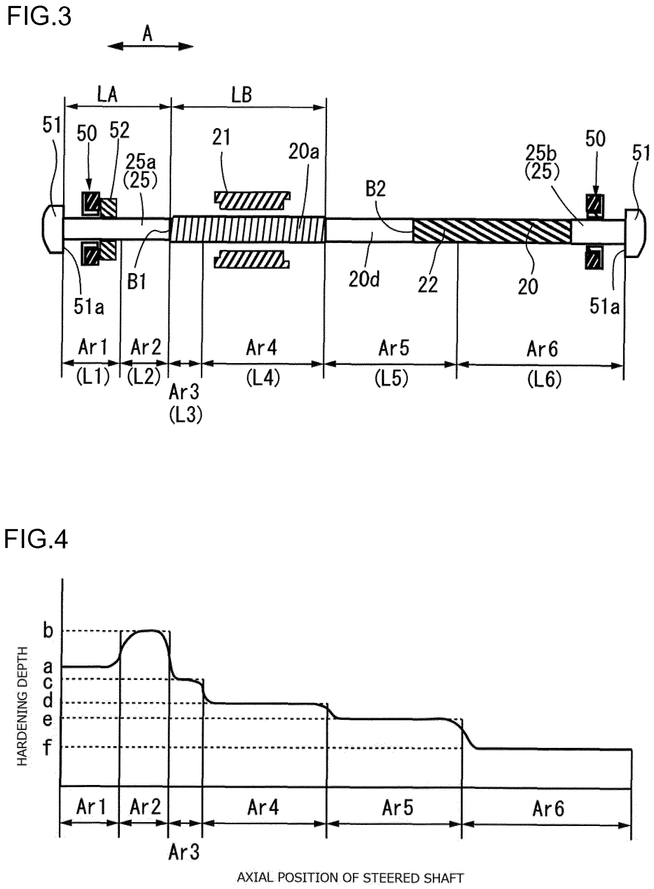

As illustrated in FIG. 1 and FIG. 3, an outer peripheral rolling groove 20a is formed on the outer peripheral surface of the steered shaft 20 at a position different from the rack teeth 22. The outer peripheral rolling groove 20a constitutes the ball screw device 40 together with an inner peripheral rolling groove 21a of a nut 21 to be discussed later, and the axial force is transmitted to the outer peripheral rolling groove 20a by the steering operation force application device 30. Details of the steering operation force application device 30 will be described later.

As described above, the steering operation force application device 30 is a device that applies the axial force to the steered shaft 20 via the ball screw device 40 using a motor M fixed to the housing 11 as a driving source. As illustrated in FIG. 1, the steering operation force application device 30 includes the motor M, a control unit ECU that drives the motor M, and a drive force transmission device 32. The motor M and the control unit ECU are fixed to and accommodated in a case 31 that is fixed to the first housing 11a of the housing 11. The control unit ECU determines steering assist torque based on output signals from the torque detecting device 14 and controls output of the motor M.

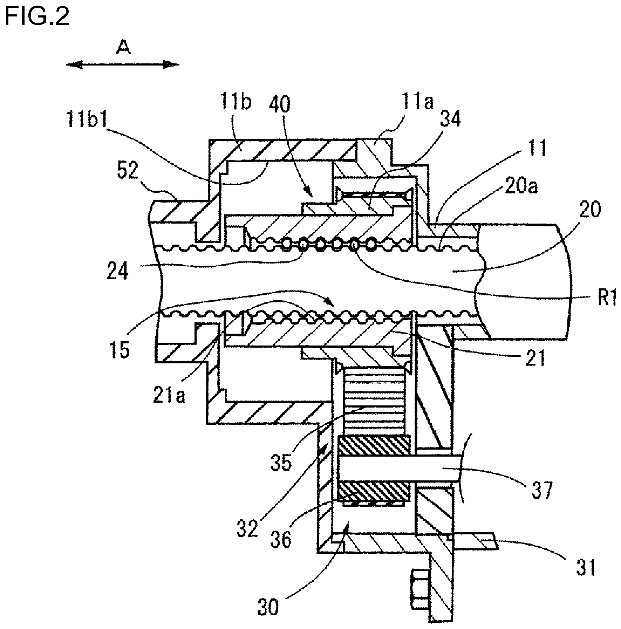

As illustrated in FIG. 2, the drive force transmission device 32 includes a drive pulley 36, a driven pulley 34, and a toothed belt 35. Both the drive pulley 36 and the driven pulley 34 are toothed pulleys provided with external helical teeth. The toothed belt 35 is an annular rubber belt that has a plurality of internal helical teeth formed on an inner periphery thereof.

The drive pulley 36 is provided on an output shaft 37 of the motor M so as to be rotatable together with the output shaft 37. The output shaft 37 is disposed parallel to the axis of the steered shaft 20 so as to be offset from the axis of the steered shaft 20 by a prescribed amount. The prescribed amount to be offset may be set as desired. The driven pulley 34 is a tubular member. The driven pulley 34 is connected to the drive pulley 36 via the toothed belt 35, and is disposed on an outer periphery of the nut 21 so as to be rotatable together with the nut 21.

The toothed belt 35 extends between outer peripheries of the driven pulley 34 and the drive pulley 36 so as to mesh with the helical teeth provided on both outer peripheries thereof. At this time, the toothed belt 35 extends between the driven pulley 34 and the drive pulley 36 with a predetermined tension so as to prevent unmeshing between the driven pulley 34 and the drive pulley 36.

Thus, the drive force transmission device 32 transmits a rotational driving force (drive force) between the drive pulley 36 and the driven pulley 34. The end portion on the first side of the nut 21 is supported by the second housing 11b via a bearing (not illustrated) so as to be rotatable relative to the inner peripheral surface 11b1 of the second housing 11b. In this way, the nut 21 is supported by the housing 11 via the bearing so as to be rotatable relative to the housing 11.

As illustrated in FIG. 2, the ball screw device 40 includes the outer peripheral rolling groove 20a formed on the outer periphery of the steered shaft 20, the nut 21 disposed on a radially outer side of the outer peripheral rolling groove 20a having an inner peripheral rolling groove 21a formed on its inner periphery, a plurality of rolling balls 24 arranged between the outer peripheral rolling groove 20a and the inner peripheral rolling groove 21a, and deflectors (not illustrated). The ball screw device 40 is provided between the steering operation force application device 30 and the steered shaft 20, and transmits the axial force to the steered shaft 20.

As illustrated in FIG. 3, the outer peripheral rolling groove 20a that constitutes the ball screw device 40 is formed between opposite end portions 25 (the first end portion 25a and the second end portion 25b) in the axial direction of the steered shaft 20. As illustrated in FIG. 2, the outer peripheral rolling groove 20a is formed on the outer peripheral surface of the steered shaft 20 so as to be helically wound around the outer peripheral surface multiple times. The nut 21 is formed in a tubular shape and is disposed on the radially outer side of the outer peripheral rolling groove 20a so as to be coaxial with the outer peripheral rolling groove 20a (the steered shaft 20).

As described above, the nut 21 has the inner peripheral rolling groove 21a on the inner peripheral surface thereof. The inner peripheral rolling groove 21a is formed in a helical shape and faces the outer peripheral rolling groove 20a (the steered shaft 20) from the radially outer side thereof. The inner peripheral rolling groove 21a is formed on the inner peripheral surface of the nut 21 by being wound multiple times. The outer peripheral rolling groove 20a and the inner peripheral rolling groove 21a of the nut 21 face each other to define a rolling path R1. The rolling balls 24 roll between the corresponding outer peripheral rolling groove 20a and the inner peripheral rolling groove 21a in the rolling path R1.

The rolling balls 24 are arranged in the rolling path R1 so as to be rollable in the rolling path R1. Thus, the outer peripheral rolling groove 20a of the steered shaft 20 and the inner peripheral rolling groove 21a of the nut 21 are meshed with each other via the rolling balls 24. The rolling balls 24 rolling in the rolling path R1 are endlessly circulated via the deflectors (not illustrated) provided in the nut 21 and a passage (not illustrated) formed inside the nut 21 to connect the deflectors to each other. Since the endless circulation of the rolling balls 24 using the deflectors is a known technique, detailed description thereof will be omitted.

According to the configuration described above, the steering operation force application device 30 drives the motor M in response to a rotating operation of the steering wheel 12 and rotates the output shaft 37 of the motor M and the drive pulley 36. The rotation of the drive pulley 36 is transmitted to the driven pulley 34 via the toothed belt 35 and rotates the driven pulley 34, thereby rotating the nut 21 that is integrally disposed with the driven pulley 34. With the rotation of the nut 21, the axial force acting in the axial direction of the steered shaft 20 is transmitted to the steered shaft 20 via the rolling balls 24 of the ball screw device 40. Consequently, the steered shaft 20 is reciprocally moved in the direction A.

As illustrated in FIG. 1, the damper portions 50 are portions that collide with the large diameter portions 51 of the steered shaft 20 and absorb the impact shock (energy) of movement, in the case where the steered shaft 20 is supplied with normal input from a driver's rotating (steering) operation of the steering wheel 12 or reverse input from outside of the vehicle via the steered wheels 28, which moves the steered shaft 20 in the direction A.

As illustrated in FIG. 1, each of the damper portions 50 according to the embodiment is mounted on two locations on opposite sides of the steering system 10 in the direction A. Each of the damper portions 50 includes a cylindrical elastic body 53 made of rubber, and a metal abutment portion 54 interposed between the elastic body 53 and the large diameter portion 51 and directly abuts against an end face 51a of the large diameter portion 51. Since the damper portion 50 is a known technique, description thereof in further detail will be omitted.

As illustrated in FIG. 1, a cylindrical rack bushing 52 is disposed on an axially inner side of the damper portion 50 that is disposed on the left side in the axial direction. The rack bushing 52 supports the first end portion 25a, of the opposite end portions 25 of the steered shaft 20 to be discussed later, with its inner peripheral surface.

As described above, the outer peripheral rolling groove 20a of the steered shaft 20 that constitutes the ball screw device 40 is formed on the outer peripheral surface of the steered shaft 20 between the opposite end portions 25 (the first end portion 25a and the second end portion 25b) in the axial direction. The outer peripheral rolling groove 20a is formed in contact with the first end portion 25a of the opposite end portions 25 in the axial direction. As illustrated in FIG. 1 and FIG. 3, the rack teeth 22 is disposed between the outer peripheral rolling groove 20a and the second end portion 25b of the opposite end portions 25 of the steered shaft 20 in the axial direction. The rack teeth 22 is disposed on the second end portion 25b side of a cylindrical portion 20d and adjacent to the cylindrical portion 20d that is disposed on the second end portion 25b side of the outer peripheral rolling groove 20a and adjacent to the outer peripheral rolling groove 20a.

The rack teeth 22 mesh with the pinion 13a that rotates together with the rotation of the steering wheel 12. A meshing position of the rack teeth 22 meshing with the pinion 13a is moved in the axial direction in conjunction with the rotation of the steering wheel 12, that is, the rotation of the pinion 13a, thereby reciprocally moving the steered shaft 20 in the direction A.

Next, heat treatment (hardening) to be applied to the steered shaft 20 will be described. As illustrated in FIG. 3, in the present embodiment, the steered shaft 20 is divided into six sections (from a first section to a sixth section) in the axial direction, which are defined as follows. Hardening (heat treatment) is performed for each section so as to match a hardening depth for each of the six sections to a set hardening depth. In the present embodiment, induction hardening is used for the hardening (heat treatment). Specifically, the hardening method used is a so-called transfer hardening method, where at least one of heating time and heating temperature is varied according to the hardening depth in each section.

A first section Ar1 (see FIG. 3) is defined as a section of the first end portion 25a that is the end portion on the first side in contact with the outer peripheral rolling groove 20a in the axial direction. The first section Ar1 has a prescribed length L1 that is shorter than a length between the end face of the first end portion 25a and the outer peripheral rolling groove 20a. The first end portion 25a has a cylindrical shape. Since the first end portion 25a has a diameter smaller than a diameter of a groove bottom of the outer peripheral rolling groove 20a, the outer periphery of the first end portion 25a is not machined by a tool when the outer peripheral rolling groove 20a is machined, and thus the first end portion 25a is maintained in a cylindrical shape.

An external thread portion (not illustrated) of the large diameter portion 51 is screwed into an internal thread hole (not illustrated) formed in the end face of the first end portion 25a to form a cylindrical shape by the external thread portion and the internal thread portion. The hardening depth in the first section Ar1 is referred to as "a" (see FIG. 4). The hardening depth refers to a depth from a surface of a material in a region in which a material hardness is hardened to a prescribed value or more. The prescribed value of the hardness is a lower limit specification value of the hardness that contributes to improving a bending strength of the steered shaft 20 by a prescribed amount. In the related art, the hardening depth a is substantially equal to a hardening depth that is used when hardening in an entire region of the first end portion 25a is generally performed.

In FIG. 3, the first section Ar1 is illustrated so as to include the end face of the first end portion 25a. However, the invention is not limited to this configuration. The first section Ar1 and the end face may have a portion therebetween that is not subjected to heat treatment or that has a hardening depth shallower than the hardening depth a in the first section Ar1 even when heat treatment is performed. In the present embodiment, the damper portion 50 and the rack bushing 52 on the first side are disposed in the first section Ar1 of the first end portion 25a.

A second section Ar2 (see FIG. 3) is defined as a section of the first end portion 25a other than the first section Ar1, and having a prescribed length L2 and adjacent to (in contact with) the outer peripheral rolling groove 20a. In the present embodiment, the prescribed length L2 is a length (L2 = LA - L1) obtained by subtracting the prescribed length L1 of the first section Ar1 from an axial length LA of the first end portion 25a. A maximum value of the hardening depth in the second section Ar2 is referred to as "b" (see FIG. 4). The maximum value b of the hardening depth in the second section Ar2 is larger than the hardening depth a in the first section Ar1.

A third section Ar3 (see FIG. 3) is defined as a section, in the outer peripheral rolling groove 20a, that starts from a boundary B1 between the second section Ar2 and the outer peripheral rolling groove 20a, and is defined as having a prescribed length L3 that is shorter than an axial length LB of the section along which the outer peripheral rolling groove 20a extends. The prescribed length L3 is preferably shorter than the length L2 of the second section Ar2 of the first end portion 25a. Specifically, the prescribed length L3 preferably corresponds to approximately 5 leads in terms of leads of the outer peripheral rolling groove 20a. The length L2 of the second section Ar2 in the axial direction preferably corresponds to approximately 10 leads in terms of the leads of the outer peripheral rolling groove 20a.

Thus, the bending strength of the steered shaft 20 around the boundary B1 between the second section Ar2 and the outer peripheral rolling groove 20a (the third section Ar3) can be set to a desired bending strength. However, the invention is not limited to this configuration, and the prescribed length L3 and the length L2 may be set as desired. In addition, the relationship in terms of magnitude between the prescribed length L3 and the length L2 may be reversed. Similar effects can be expected with the above configuration. The hardening depth in the third section Ar3 is referred to as "c" (see FIG. 4). The hardening depth in the third section Ar3 refers to the depth from the groove bottom of the outer peripheral rolling groove 20a.

A fourth section Ar4 (see FIG. 3) is defined as a section of the outer peripheral rolling groove 20a other than the third section Ar3. That is, an axial length L4 of the fourth section Ar4 is a length (L4 = LB - L3) obtained by subtracting the prescribed length L3 of the third section Ar3 from the axial length LB of the outer peripheral rolling groove 20a. Thus, the axial length L4 of the fourth section Ar4 is generally longer than the prescribed length L3 that corresponds to approximately 5 leads. The hardening depth in the fourth section Ar4 is referred to as "d" (see FIG. 4). Similar to the hardening depth in the third section Ar3, the hardening depth in the fourth section Ar4 refers to the depth from the groove bottom of the outer peripheral rolling groove 20a. The hardening depth d is substantially equal to a hardening depth that is used when hardening is generally performed in the outer peripheral rolling groove 20a in the related art.

A fifth section Ar5 (see FIG. 3) is defined as a section having a prescribed length L5. The prescribed length L5 is obtained by adding a length of the cylindrical portion 20d located on the second end portion 25b side of the outer peripheral rolling groove 20a in the axial direction and adjacent to the outer peripheral rolling groove 20a, and a length of a portion of the rack teeth 22 on the second end portion 25b side of the cylindrical portion 20d and adjacent to the cylindrical portion 20d and starting from the boundary B2 between the cylindrical portion 20d and the rack teeth 22. A ratio of the length of the cylindrical portion 20d and the length of the portion of the rack teeth 22 that constitute the prescribed length L5 may be set as desired. The hardening depth in the fifth section Ar5 is referred to as "e" (see FIG. 4). The hardening depth in the portion of the rack teeth 22 refers to the depth from the bottom of the rack teeth 22.

In the steered shaft 20, hardening is performed on a back surface of the rack teeth 22 as well as on side surfaces between the rack teeth 22 and the back surface of the rack teeth 22. Since the distance between the surfaces of the above portions and the heating coil is set close to each other during heat treatment, the hardening depth in the back surface and the side surfaces of the rack teeth 22 is deeper than the hardening depth from the bottom of the rack teeth 22. Since the hardening depth from the bottom of the teeth contribute most to the bending strength in a bending direction of the steered shaft required for the vehicle, the hardening depth from the bottom of the teeth is regarded as a representative value.

A sixth section Ar6 (see FIG. 3) is defined as a section including at least a portion of the rack teeth 22 other than the portion of the rack teeth 22, which constitutes the fifth section Ar5. In the present embodiment, the sixth section Ar6 is defined as a section obtained by adding the section of the rack teeth 22 other than the portion of the rack teeth 22, which constitutes the fifth section Ar5, and the second end portion 25b. The hardening depth in the sixth section Ar6 is referred to as "f" (see FIG. 4). The damper portion 50 on the second side is disposed on the second end portion 25b.

Similar to the hardening depth in the portion of the rack teeth 22 included in the fifth section Ar5, the hardening depth in the portion of the rack teeth 22 included in the sixth section Ar6 refers to the depth from the bottom of the rack teeth 22. The hardening depth f is substantially equal to a hardening depth that is used when hardening in the entire region of the rack teeth 22 is generally performed in the related art. The relationship between the hardening depth from the bottom of the teeth and the hardening depth in the back surface and the side surface, as well as the positions thereof are the same as those for the fifth section Ar5. The hardening depth e in the fifth section Ar5 is larger than the hardening depth f in the sixth section Ar6.

As illustrated in FIG. 4, the relationship, in terms of magnitude, between the respective hardening depths a to f in the first section Ar1 to the sixth section Ar6 defined as described above satisfies the following formula (1). In this case, as described above, at least one of the heating time and the heating temperature is varied according to the hardening depth for induction hardening to obtain the desired hardening depth for each section.

$$b > a \geq c > d > e > f \qquad (1)$$

The hardening depths a, c, d, e, and f described above are values of the hardening depth that are substantially constant and serve as substantially the median in each section. The prescribed value of the material hardness is the same in the hardening depths in the first section Ar1 to the sixth section Ar6.

Even if the formula (1) is not completely satisfied, it may be only necessary that the maximum value b of the hardening depth in the second section Ar2 is larger than the hardening depth a in the first section Ar1 (b > a), as discussed above. The hardening depth c in the third section Ar3 is larger than the hardening depth d in the fourth section Ar4. In addition to b > a discussed above, it may be only necessary that the hardening depth e in the fifth section Ar5 is smaller than the hardening depth d in the fourth section Ar4 (d > e). Similar effects can be obtained with the above configuration.

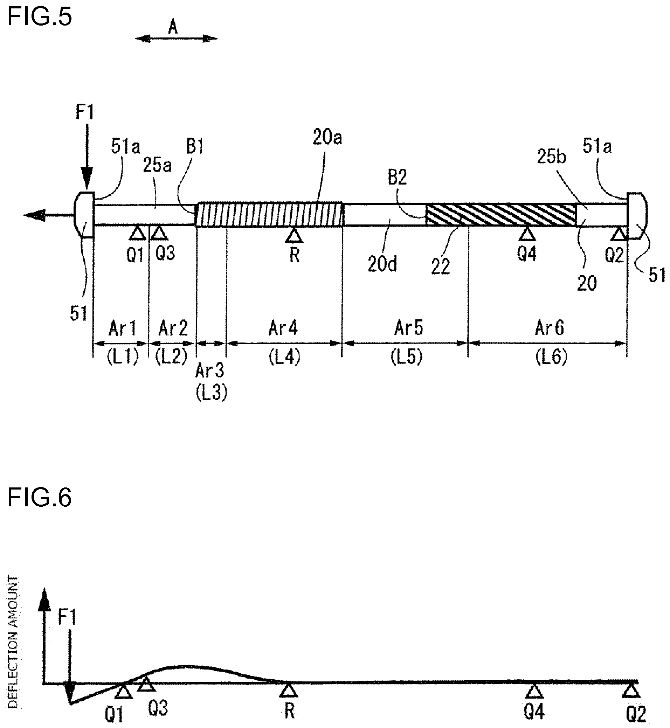

For example, a case where the steered wheel 28 on the first side (left side in FIG. 1) runs over a curb with the hardening depths a to f in the first section Ar1 to the sixth section Ar6 set as described above is assumed. In this case, a reaction force F1 from the curb when the steered wheel 28 runs over the curb may be input to the large diameter portion 51, that is, the first end portion 25a of the steered shaft 20, as illustrated in FIG. 5.

FIG. 5 shows the steered shaft 20 moved leftward with the large diameter portion 51 on the right side being in contact with the damper portion 50 on the second side. At this time, the tie rods 26, 26 are inclined at prescribed angles with respect to the axis of the steered shaft 20, as illustrated in FIG. 1.

In FIG. 5, the steered shaft 20 is supported by the damper portion 50 on the left side at a support position Q1. The steered shaft 20 is supported by the damper portion 50 on the second side at a support position Q2. The first end portion 25a of the steered shaft 20 is supported by the rack bushing 52 at a support position Q3. The rack teeth 22 is supported by the pinion 13a meshing therewith at a support position Q4.

For example, the steered shaft 20 may be deflected between the support position Q1 and a center position R in the axial direction of the nut 21 as illustrated in FIG. 6. In this case, in a region between the support position Q1 and the center position R, stress is most likely to be concentrated on the boundary B1 between the outer peripheral rolling groove 20a and the first end portion 25a, as well as portions on both axial sides of the boundary B1, namely the second section Ar2 and the third section Ar3. The hardening depth b in the second section Ar2 and the hardening depth c in the third section Ar3 are larger than the hardening depth a in the first section Ar1 and the hardening depth d in the fourth section Ar4 by prescribed amounts, respectively. Therefore, strength against bending, especially yield strength of the steered shaft 20 is improved, and thus residual deformation after removal of the load is effectively restrained.

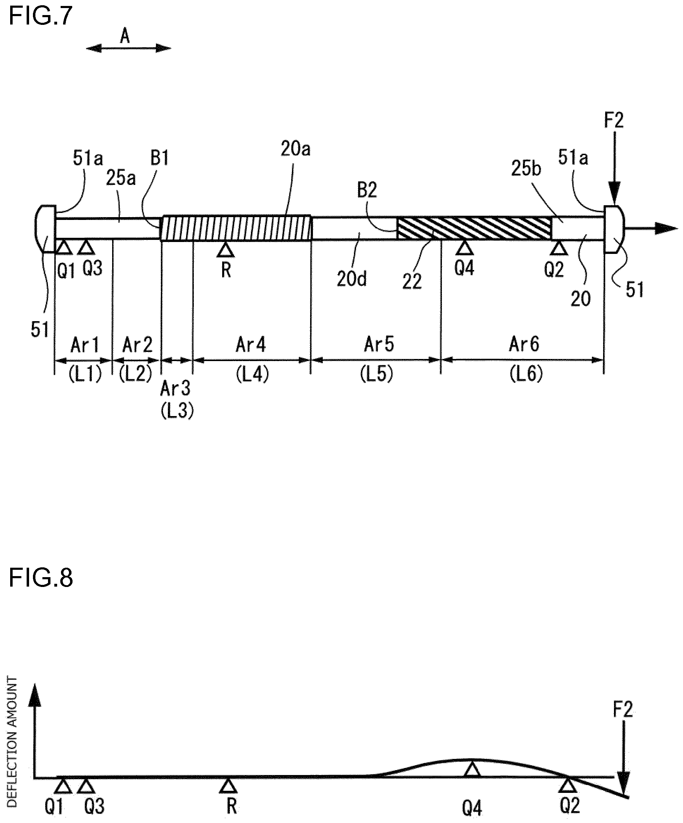

Alternatively, for example, the case where the steered wheel 28 on the second side (right side in FIG. 1) runs over a curb is assumed. In this case, a reaction force F2 from the curb when the steered wheel 28 runs over the curb may be input to the second end portion 25b of the steered shaft 20, as illustrated in FIG. 7. FIG. 7 shows the steered shaft 20 moved rightward with the large diameter portion 51 on the left side being in contact with the damper portion 50 on the first side. At this time, the tie rods 26, 26 are inclined at prescribed angles with respect to the axis of the steered shaft 20 as illustrated in FIG. 1.

In this case, for example, the steered shaft 20 may be deflected between the support position Q2 supported by the damper portion 50 on the second side and the center position R in the axial direction of the nut 21 as illustrated in FIG. 8. In this case, in a region between the support position Q2 and the center position R, stress is most likely to be concentrated on the boundary B2 between the cylindrical portion 20d and the rack teeth 22, as well as portions on both axial sides of the boundary B2, namely the fifth section Ar5. The hardening depth e in the fifth section Ar5 is larger than the hardening depth f in the sixth section Ar6 by a prescribed amount. Therefore, strength against bending, especially yield strength of the steered shaft 20 is improved, and thus the residual deformation after removal of the load is effectively restrained.

The relationship in terms of magnitude between the respective hardening depths a to f in the first section Ar1 to the sixth section Ar6 is not limited to that represented by the order described in the first embodiment and may satisfy the following formula (2). In this manner, the same effects as those of the above-described embodiment can be expected.

$$b \geq c > a > d > e > f \qquad (2)$$

According to the first embodiment, in the steered shaft 20 provided in the steering system 10, the outer peripheral rolling groove 20a is formed adjacent to the first end portion 25a, which is the end portion on the first side of the opposite end portions 25, in the axial direction. The section of the first end portion 25a which is closer to the end face and has the prescribed length L1 shorter than the length between the end face and the outer peripheral rolling groove 20a is defined as the first section Ar1. The section other than the first section Ar1 in the first end portion 25a and adjacent to the outer peripheral rolling groove 20a is defined as the second section Ar2. The section, in the outer peripheral rolling groove 20a, that starts from the boundary B1 between the second section Ar2 and the outer peripheral rolling groove 20a, and that has the prescribed length L3 shorter than the axial length LB of the section along which the outer peripheral rolling groove 20a extends is defined as the third section Ar3. The section in the outer peripheral rolling groove 20a other than the third section Ar3 is defined as the fourth section Ar4. When the first section Ar1 to the fourth section Ar4 are defined as described above, the maximum value of the hardening depth b in the second section Ar2 is larger than the hardening depth a in the first section Ar1.

Thus, in the first end portion 25a, the hardening depth b in the second section Ar2 adjacent to the outer peripheral rolling groove 20a is larger than the hardening depth a in the first section Ar1 that is not adjacent to the outer peripheral rolling groove 20a by a prescribed amount. In the outer peripheral rolling groove 20a, the hardening depth c in the third section Ar3 adjacent to the first end portion 25a (the second section Ar2) is larger than the hardening depth d in the fourth section Ar4 that is not adjacent to the first end portion 25a (the second section Ar2) by a prescribed amount.

Therefore, even in the case where the reaction force F1 from the steered wheel 28 is input to the first end portion 25a side of the steered shaft 20 and an excessively large load in the bending direction is applied to the steered shaft 20, residual deformation (deflection) of the steered shaft 20 after removal of the load is effectively restrained, since the second section Ar2 and the third section Ar3 located on both axial sides of the end portion of the outer peripheral rolling groove 20a (boundary B1) and subjected to large stress have large hardening depths. In this case, the hardening depths b and c are increased only in the sections (the second section Ar2 and the third section Ar3) that are required for restriction of residual deformation (deflection), allowing reduction in the entire cycle time for heat treatment and the cost.

According to the first embodiment, in the axial direction of the steered shaft 20, the length L2 of the second section Ar2 is larger than the length L3 of the third section Ar3. It takes time to perform heat treatment on the third section Ar3 in the outer peripheral rolling groove 20a. The length of the third section Ar3 can be reduced, allowing cost reduction.

According to the first embodiment, the steering system 10 includes the pinion 13a and the steered shaft 20 provided with the rack teeth 22. The rack teeth 22 mesh with the pinion 13a that rotates together with the rotation of the steering wheel 12. The rack teeth 22 is disposed between the outer peripheral rolling groove 20a and the second end portion 25b that is the end portion on the second side of the opposite end portions 25 and adjacent to the cylindrical portion 20d adjacent to the outer peripheral rolling groove 20a. The section having a prescribed length L5 obtained by adding the length of the cylindrical portion 20d located on the second end portion 25b side of the outer peripheral rolling groove 20a in the axial direction and adjacent to the outer peripheral rolling groove 20a, and the length of the portion of the rack teeth 22, which is located on the second end portion 25b side of the cylindrical portion 20d and adjacent to the cylindrical portion 20d, starting from the boundary B2 between the cylindrical portion 20d and the rack teeth 22, is defined as the fifth section Ar5. The section of the rack teeth 22 other than the fifth section Ar5 is defined as the sixth section Ar6. When the fifth section Ar5 and the sixth section Ar6 are defined as described above, the hardening depth e in the fifth section Ar5 is larger than the hardening depth f in the sixth section Ar6 (e > f).

Therefore, even in the case where the reaction force F2 from the steered wheel 28 is input to the second end portion 25b side of the steered shaft 20 and an excessively large load in the bending direction is applied to the steered shaft 20, deflection of the steered shaft 20 is effectively restrained, since the fifth section Ar5 located on both axial sides of the end portion of the rack teeth 22 (boundary B2) and subjected to large stress has a large hardening depth.

In this case, the hardening depth e is increased only in the section (the fifth section Ar5) that is required for restriction of deflection, allowing reduction in the cycle time for heat treatment to be performed on the entire rack teeth 22 and the cost. Although the hardening depth e in the fifth section Ar5 is smaller than the hardening depth d in the fourth section Ar4 of the outer peripheral rolling groove 20a, sufficient strength against deflection can be ensured. Specifically, the back surface of the rack teeth 22 has a circumferential surface. Therefore, the rack teeth 22 has a sectional coefficient larger than that of the outer peripheral rolling groove 20a, and the hardening depth e can be made smaller than the hardening depth d in the fourth section Ar4. This also makes it possible to reduce the cycle time for heat treatment and cost.

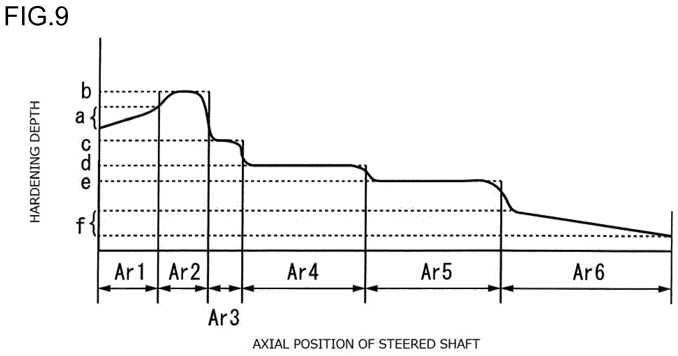

In the first embodiment, it has been described that the hardening depth a in the first section Ar1 of the steered shaft 20 is constant. However, the invention is not limited to this configuration. As a first modification, as illustrated in FIG. 9, the hardening depth a in the first section Ar1 may be gradually increased from the end face side of the first end portion 25a toward the second section Ar2. This can further reduce the cycle time of hardening in the first section Ar1.

Furthermore, in the first embodiment, it has been described that the hardening depth f in the sixth section Ar6 of the steered shaft 20 is constant. However, the invention is not limited to this configuration. As a second modification, as illustrated in FIG. 9, the hardening depth f in the sixth section Ar6 may be gradually decreased from the boundary between the fifth section Ar5 and the sixth section Ar6 toward the second end portion 25b. This can further reduce the cycle time of hardening in the sixth section Ar6.

In the embodiments, a rack-parallel-type electric power steering system 10 is assumed to be used. However, the invention is not limited to this configuration. As another embodiment, the electric power steering system may be a so called rack-direct-type electric power steering system in which a rack shaft and a motor are coaxially disposed as described in, for example, Japanese Unexamined Patent Application Publication No. 2011-105075 (JP 2011-105075 A). Alternatively, the steering system may be of a steer-by-wire (SBW) type in which a steered shaft that is not mechanically coupled to the steering wheel is driven by a motor provided in a steering operation force application device. Alternatively, the invention may be applied to a steering system that is applicable to automous driving.

**Claims**

1. A steering system comprising:

   a housing;
   a steered shaft that is supported by the housing, each of opposite ends of the steered shaft being coupled to a corresponding one of steered wheels via a corresponding one of tie rods, the steered shaft being relatively movable in an axial direction with respect to the housing to steer the steered wheels;
   a steering operation force application device configured to apply an axial force to the steered shaft using a motor as a driving force; and
   a ball screw device that is included in the steering operation force application device and configured to directly transmit axial force to the steered shaft, wherein:

   the steered shaft includes

   a cylindrical end portion provided on the opposite ends of the steered shaft and having a prescribed length from an end face, and
   a helical outer peripheral rolling groove that is formed in an outer peripheral surface between opposite end portions of the steered shaft in the axial direction and that constitutes the ball screw device;

   in the axial direction, the outer peripheral rolling groove is formed in contact with a first end portion that is one end portion of the opposite end portions;
   when a section of the first end portion on an end face side and having a prescribed length shorter than a length from the end face to the outer peripheral rolling groove is defined as a first section;
   a section of the first end portion other than the first section and adjacent to the outer peripheral rolling groove is defined as a second section;
   a section, in the outer peripheral rolling groove, starting from a boundary between the second section and the outer peripheral rolling groove and having a prescribed length shorter than an axial length of a section along which the outer peripheral rolling groove extends is defined as a third section; and
   a section other than the third section in the outer peripheral rolling groove is defined as a fourth section,
   a maximum value of a hardening depth in the second section is larger than a hardening depth in the first section.

2. The steering system according to claim 1, wherein a hardening depth in the third section is larger than a hardening depth in the fourth section.

3. The steering system according to claim 1 or 2, wherein a length of the second section is longer than a length of the third section in the axial direction.

4. The steering system according to any one of claims 1 to 3, wherein the hardening depth in the first section gradually increases from the end face side toward the second section.

5. The steering system according to any one of claims 1 to 3, wherein:

   the steering system includes a pinion;
   the steered shaft includes rack teeth meshing with the pinion that rotates together with rotation of a steering wheel, the rack teeth disposed between the outer peripheral rolling groove and a second end portion that is the other end portion of the opposite end portions and adjacent to a cylindrical portion adjacent to the outer peripheral rolling groove;
   a section having a prescribed length is defined as a fifth section, the prescribed length being obtained by adding a length of the cylindrical portion and a length of a portion of the rack teeth, the cylindrical portion being located on a second end portion side of the outer peripheral rolling groove in the axial direction and adjacent to the outer peripheral rolling groove, and the portion of the rack teeth being located on the second end portion side of the cylindrical portion and adjacent to the cylindrical portion and starting from a boundary between the cylindrical portion and the rack teeth; and

when a section at least other than the fifth section in the rack teeth is defined as a sixth section, the hardening depth in the fifth section is larger than the hardening depth in the sixth section.

6. The steering system according to claim 5, wherein the hardening depth in the fifth section is smaller than the hardening depth in the fourth section.

7. The steering system according to claim 5 or 6, wherein

the hardening depth in the sixth section gradually decreases from the boundary from the sixth section and the fifth section toward the end face side of the second end portion.

FIG.1

FIG.2

FIG.3

A

LA          LB

51  50  52
         25a
         (25)        21        20a
                                        B2              25b        50
                                                        (25)              51

51a                                                                        51a
     B1                                        20d   22        20

Ar1 | Ar2              Ar4          Ar5              Ar6
(L1) | (L2)            (L4)         (L5)             (L6)
        Ar3
        (L3)

FIG.4

b
a
c
d
e
f

HARDENING DEPTH

Ar1 | Ar2        Ar4          Ar5              Ar6

Ar3

AXIAL POSITION OF STEERED SHAFT

FIG.5

FIG.6

FIG.7

A

51a
25a  B1                    20a
                                    B2                           25b  51a
                                                                           F2

Q1 Q3                      R                                    Q4      Q2
51                              20d    22                                    20  51

| Ar1 | Ar2 | | Ar4 | Ar5 | Ar6 |
| (L1) | (L2) | | (L4) | (L5) | (L6) |

Ar3
(L3)

FIG.8

DEFLECTION AMOUNT

F2

Q1  Q3                     R                                    Q4      Q2

FIG.9

Europäisches
Patentamt

European
Patent Office

Office européen
des brevets

# EUROPEAN SEARCH REPORT

Application Number

EP 19 19 9251

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/007801 A1 (FUKUMURA KENICHI [JP]) 15 January 2004 (2004-01-15) * paragraphs [0033] - [0038]; claims 1-4; figures 1-5 * ----- | 1-7 | INV. B62D5/04 F16H25/22 |
| A | US 6 502 473 B1 (AKIYAMA KAZUHIRO [JP] ET AL) 7 January 2003 (2003-01-07) * the whole document * ----- | 1-7 | |
| A | DE 10 2016 212304 A1 (THYSSENKRUPP AG [DE]; THYSSENKRUPP PRESTA AG [LI]) 11 January 2018 (2018-01-11) * paragraphs [0015] - [0020]; figures 1-3 * ----- | 1 | |
| | | | TECHNICAL FIELDS SEARCHED (IPC) B62D F16H |

The present search report has been drawn up for all claims

| Place of search | Date of completion of the search | Examiner |
|---|---|---|
| The Hague | 6 February 2020 | Janusch, Stefan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 19 9251

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2020

| Patent document cited in search report | | Publication date | Patent family member(s) | | Publication date |
|---|---|---|---|---|---|
| US 2004007801 | A1 | 15-01-2004 | DE | 60307177 T2 | 18-10-2007 |
| | | | EP | 1369337 A1 | 10-12-2003 |
| | | | JP | 2004010956 A | 15-01-2004 |
| | | | US | 2004007801 A1 | 15-01-2004 |
| US 6502473 | B1 | 07-01-2003 | DE | 60037930 T2 | 09-07-2009 |
| | | | EP | 1088738 A2 | 04-04-2001 |
| | | | JP | 3526794 B2 | 17-05-2004 |
| | | | JP | 2001099269 A | 10-04-2001 |
| | | | KR | 20010050771 A | 25-06-2001 |
| | | | US | 6502473 B1 | 07-01-2003 |
| DE 102016212304 | A1 | 11-01-2018 | CN | 109415083 A | 01-03-2019 |
| | | | DE | 102016212304 A1 | 11-01-2018 |
| | | | EP | 3481700 A1 | 15-05-2019 |
| | | | WO | 2018007378 A1 | 11-01-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004010956 A
- JP 2003160812 A

- JP 2011105075 A